# EUROPÄISCHE PATENTSCHRIFT

(11) **EP 3 395 476 B1**
(45) Veröffentlichungstag und Bekanntmachung des Hinweises auf die Patenterteilung: **16.11.2022**
(21) Anmeldenummer: 18158288.3
(22) Anmeldetag: 23.02.2018
(51) Int. Cl.: B22F 9/02, C04B 35/622, B33Y 70/00, C08K 3/40, B22F 1/00, C04B 35/626, C04B 35/634, C08K 3/08, C08K 5/00, C08K 5/101, B22F 1/065, B22F 1/103

(54) **VERFAHREN ZUR HERSTELLUNG EINES THERMOPLASTISCHEN FORMMASSENPULVERS**
METHOD FOR MANUFACTURING A THERMOPLASTIC MOULDING POWDER
PROCÉDÉ DE FABRICATION D'UNE MATIÈRE À MOULER EN POUDRE THERMOPLASTIQUE

(30) Priorität: 28.04.2017 DE 102017004180
(43) Veröffentlichungstag der Anmeldung: 31.10.2018
(73) Patentinhaber: Emery Oleochemicals GmbH, 40599 Düsseldorf (DE)
(72) Erfinder: Jaeckel, Manfred, 27612 Loxstedt (DE)
(74) Vertreter: Herrmann, Uwe

(56) Entgegenhaltungen:
- EP-A1- 2 033 724
- WO-A1-96/05038
- WO-A1-2015/175726
- CN-A- 106 316 388
- DE-A1- 2 065 705
- KR-A- 20160 071 014
- Anonymous: "Glasübergangstemperatur | Kunststoffrohrverband e.V. - Fachverband der Kunststoffrohr-Industrie", , 12 June 2020 (2020-06-12), XP055704352, Retrieved from the Internet: URL:https://www.krv.de/artikel/glasueberga ngstemperatur [retrieved on 2020-06-12]

## Beschreibung

Die vorliegende Erfindung betrifft ein Verfahren zur Herstellung eines thermoplastischen Formmassenpulvers.

Aus dem Stand der Technik ist es bekannt, Feedstockmassen bereitzustellen, aus denen in einem oder mehreren weiteren Bearbeitungsschritten Formkörper gewonnen werden. Unter einem thermoplastischen Formmassenpulver ist im Rahmen der Erfindung insbesondere eine pulverförmige Feedstockmasse zu verstehen, aus der in einem oder mehreren weiteren Schritten ein Formkörper z.B. durch Sintern gewonnen wird.

Pulverförmige Feedstockmassen sind gemäß dem Stand der Technik beispielsweise dadurch zugänglich, dass durch thermoplastische Formgebung hergestellte Granulate in einem Zerkleinerungsprozess, wie beispielsweise durch einen Mahlprozess entweder nass oder trocken zerkleinert werden.

Die auf diese Weise herstellten Pulver besitzen eine zerklüftete Geometrie sowie eine sehr unterschiedliche Teilchengröße, überwiegend im Bereich von 0,01 mm bis 1,0 mm.

Aufgrund der zerklüfteten Teilchengeometrie haben diese Pulver bzw. Feedstockmassen eine verhältnismäßig geringe Schüttdichte und besitzen im Teilchenbereich unterhalb von 0,1 mm ein schlechtes Fließvermögen.

Diese beiden durch einen Mahlprozess bedingten Eigenschaften des Pulvers sind für bestimmte Anwendungstechnologien störend, insbesondere dann, wenn eine hohe Packungsdichte einer Pulverschüttung angestrebt wird oder wenn das Pulver z.B. mit einem Rakel in einer dünnen Schicht sehr gleichmäßig aufgetragen werden soll.

Als Beispiele für diese Anwendungstechnologien sind das sogenannte Pulverschäumen von keramischen oder metallischen Formmassen zu nennen, wie dies z.B. in der EP 2 295 390 B1 beschrieben ist, sowie die Verwendung der pulverförmigen Formmassen als sinterfähiger Feedstock für die additive Fertigung mittels selektivem Lasersintern (SLS).

In beiden Fällen wird zunächst ein sinterfähiger Grünkörper erzeugt, der nachträglich entbindert wird, d.h. bei dem teilweise oder vollständig der Binder entfernt wird, und anschließend ein Sinterverfahren durchgeführt wird, um den gewünschten Formkörper zu erhalten.

Beim SLS-Verfahren ist eine hohe Gründichte, d.h. eine hohe Dichte der die Formmasse bildenden Formmassenteilchen, im Grünkörper von Vorteil, damit bei dem anschließenden Sinterverfahren eine möglichst hohe Dichte des Formkörpers erhalten wird. Dabei ist es von Vorteil, wenn sphärische Formmassenteilchen zum Einsatz kommen.

Die sphärische Form der Formmassenteilchen ist auch vorteilhaft, um eine gute Fließfähigkeit der Formmassenteilchen beim Rakeln der einzelnen zu lasernden Schichten zu erhalten.

Für die beiden Fertigungstechniken sind pulverförmige Formmassenteilchen vorteilhaft, die sphärisch sind, die Teilchengrößen unterhalb von 0,2 mm aufweisen und die zudem in hohen Schüttdichten vorliegen.

Weiterhin offenbart die KR 2016 0071014 A ein Verfahren zur Herstellung eines Keramikersatzes zur Zahnbehandlung unter Verwendung eines dreidimensionalen (3D) Druckers. Das Verfahren umfasst die Schritte: Vorbereiten von Druckmaterialien; Ausführen eines 3D-Drucks unter Verwendung der Druckmaterialien zum Drucken eines Formkörpers; und Backen des erstarrten Formkörpers.

Zudem ist aus der CN 106 316 388 A ein Verfahren zum Lasersintern und 3D-Drucken von Bariumtitanatkeramikpulver bekannt. Aus der WO 96/05038 A1 ist ein Verfahren bekannt, Formmassenpulver für das Lasersintern durch Sprühtrocknen herzustellen.

Der vorliegenden Erfindung liegt somit die Aufgabe zugrunde, pulverförmige Formmassen bereitzustellen, die eine oder mehrere und vorzugsweise alle der genannten Eigenschaften aufweisen, d.h. deren Teilchen eine sphärische Geometrie aufweisen, die frei fließen und die in einer hohen Schüttdichte vorliegen.

Diese Aufgabe wird durch ein Verfahren mit den Merkmalen des Anspruchs 1 gelöst. Danach ist vorgesehen, dass das thermoplastische Formmassenpulver bestehend aus oder umfassend sphärische Formmassenteilchen aus einer Suspension aus keramischen und/oder metallischen und/oder glasartigen Substratteilchen in einem Lösungsmittel durch Sprühtrocknung erhalten wird.

In dem Lösungsmittel- ist ein Binder gelöst, der wenigstens ein Polymer aufweist, das in dem Lösungsmittel löslich ist.

Des Weiteren weist der Binder einen in dem Lösungsmittel löslichen Weichmacher auf. Optional weist der Binder weitere in dem Lösungsmittel lösliche

Additive auf, die vorzugsweise molekular in diesem gelöst sind.

Bei diesen Additiven kann es sich beispielsweise um einen oder mehrere der Stoffe Gleitmittel, Additive, die mit dem Polymer ein zumindest binäres System bilden.

Vorzugsweise handelt es sich bei dem Additiv um eine Substanz, die das rheologische Verhalten des Polymers beeinflusst.

Das Polymer ist erfindungsgemäß Polyamid.

Beim Sprühtrocknen der Suspension geht das Lösungsmittel vollständig in die Gasphase über und die keramischen und/oder metallischen und/oder glasartigen Substratteilchen bilden dabei Agglomerate in Form der sphärischen Formmassenteilchen. Durch das Verdüsen und das gleichzeitige Verdunsten des Lösungsmittels der Suspension entstehen aus den Tröpfchen, die die keramischen und/oder metallischen und/oder glasartigen Teilchen enthalten, feste weitgehend sphärische Formmassenteilchen, deren keramische und/oder metallische und/oder glasartigen Teilchen durch den Binder zusammengehalten werden.

An dieser Stelle wird darauf hingewiesen, dass der Begriff "sphärisch" auch "weitgehend sphärisch" mit umfasst. Vorzugsweise ist darunter ein kugelförmiger oder der Kugelform angenäherter Körper zu verstehen.

Des Weiteren wird darauf hingewiesen, dass die Begriffe "ein" und "eine" nicht zwingend bedeuten, dass genau eines der fraglichen Elemente vorhanden ist, wenngleich auch dies eine mögliche Ausgestaltung der Erfindung ist. Von dem Begriff "ein" oder "eine" ist auch eine Mehrzahl der fraglichen Elemente umfasst. Das Verdunsten kann durch die Zufuhr eines erwärmten Gasstroms, wie beispielsweise Luft oder Stickstoff oder eines sonstigen Gases gefördert werden. Durch das Verfahren der Sprühtrocknung werden sphärische Formmassenteilchen geschaffen. Das Verfahren der Sprühtrocknung kennzeichnet sich dadurch aus, dass die zu gewinnenden Stoffe entweder in einer Flüssigkeit gelöst oder dispergiert vorliegen. Beim Sprühtrocknen wird ein vorzugsweise warmer Luftstrom eines Gases, wie Luft oder Stickstoff zugeführt. Durch das Verdüsen und durch das gleichzeitige Verdunsten der Flüssigkeit durch die Zufuhr des genannten Gasstroms entstehen aus den Tröpfchen feste, sphärische Formmassenteilchen, worunter auch weitgehend sphärische Formmassenteilchen zu verstehen sind.

Ein wesentlicher Bestandteil des erfindungsgemäßen Verfahrens ist somit das Sprühtrocknen, durch das sphärische Formmassenteilchen, d.h. sphärische Formmassenpulver generiert werden, d.h. Pulver, die aus den sphärischen Formmassenteilchen bestehen oder diese enthalten.

In einer Ausgestaltung der Erfindung ist der Binder, wie das oder die alkohollöslichen Polyamide, molekular in der Suspension gelöst. Der Binder hält die keramischen und/oder metallischen und/oder glasartigen Substratteilchen bei und nach dem Sprühtrocknen zusammen, so dass diese die Formmassenteilchen bilden können. Diese sind ausreichend stabil, um weiteren Verarbeitungsschritten unterzogen werden zu können.

Bei dem Lösungsmittel handelt es sich erfindungsgemäß um einen oder mehrere Alkohole oder um ein oder mehrere alkoholische Medien.

Bevorzugt ist es, wenn es sich bei dem Weichmacher um einen Ester einer aromatischen Hydroxybenzoesäure und vorzugsweise um einen p-Hydroxybenzoesäure-Fettalkoholester handelt, wobei die Länge der Kohlenstoffkette vorzugsweise im Bereich C12 - C26, besonders vorzugsweise im Bereich C18 - C22 liegt.

Die metallischen Substratteilchen, die in der Suspension vorliegen, weisen vorzugsweise eine mittlere Größe im Bereich von 5 µm bis 25 µm, vorzugsweise im Bereich von 10 µm bis 20 µm und besonders bevorzugt 15 µm auf.

Die keramischen Substratteilchen, die in der Suspension vorliegen, weisen vorzugsweise eine mittlere Größe im Bereich von 0,1 µm bis 5 µm auf.

Im Falle glasartiger Substratteilchen, die in der Suspension vorliegen, weisen diese vorzugsweise eine mittlere Größe im Bereich von 1,0 µm bis 50 µm auf.

Die Formmassenteilchen, die das thermoplastische Formmassenpulver bilden und die eine Mehrzahl von keramischen und/oder metallischen und/oder glasartigen Substratteilchen und den Binder enthalten, weisen vorzugsweise eine Größe im Bereich von > 0,05 mm und/oder < 0,2 mm, vorzugsweise 0,05 mm bis 0,15 mm und besonders bevorzugt 0,10 mm auf.

Bei der genannten Größe kann es um die größte Abmessung der keramischen und/oder metallischen und/oder glasartigen Substratteilchen bzw. der Formmassenteilchen und/oder um deren Durchmesser handeln.

Vorzugsweise ist vorgesehen, dass die Formmassenteilchen jeweils eine maximale Abmessung Aₘₐₓ haben und für mindestens 80 % der Formmassenteilchen gilt: 0,005 mm ≤ Aₘₐₓ ≤ 0,3 mm, insbesondere 0,008 mm ≤ Aₘₐₓ ≤ 0,2 mm, und insbesondere 0,01 mm ≤ Aₘₐₓ ≤ 0,1 mm.

Erfindungsgemäß ist vorgesehen, dass die Formmassenteilchen jeweils eine minimale Abmessung Amin und eine maximale Abmessung Aₘₐₓ haben und für mindestens 80 % der Formmassenteilchen gilt: 0,6 ≤ Aₘᵢₙ/Aₘₐₓ ≤ 1, insbesondere 0,7 ≤ Aₘᵢₙ/Aₘₐₓ ≤ 1, und insbesondere 0,8 ≤ Aₘᵢₙ/Aₘₐₓ ≤ 1.

Denkbar ist es weiterhin, dass die Substratteilchen jeweils eine maximale Abmessung Bₘₐₓ haben und für mindestens 80 % der Substratteilchen (3) gilt: 1 µm ≤ Bₘₐₓ ≤ 50 µm, insbesondere 5 µm ≤ Bₘₐₓ ≤ 40 µm, und insbesondere 10 µm ≤ Bₘₐₓ ≤ 30 µm.

Die Substratteilchen bestehen vorzugsweise aus Glas, Keramik, Edelmetall, Hartmetall, Buntmetall, Eisen, Titan oder Stahl, aus einer oder mehreren von deren Legierungen, Superlegierungen oder Verbindungen oder weisen eines oder mehrere dieser Stoffe bzw. Metalle, Legierungen oder Verbindungen auf. Wie oben ausgeführt, kann es sich bei den Substratteilchen auch um solche handeln, die aus Keramik und/oder Glas bestehen oder Keramik und/oder Glas aufweisen.

In einer bevorzugten Ausgestaltung der Erfindung werden zunächst die keramischen und/oder metallischen Substratteilchen in ein Lösungsmittel, wie beispielsweise in eine alkoholische Lösung, umfassend den Binder eingebracht und sodann wird diese Suspension in einer Sprühanlage unter teilweiser oder vollständiger Verdampfung des Lösungsmittels verdüst. Dabei bilden die keramischen und/oder metallischen und/oder glasartigen Substratteilchen sphärische Agglomerate in Form der Formmassenteilchen.

Vorzugsweise ist vorgesehen, dass das Einbringen der keramischen und/oder metallischen und/oder glasartigen Substratteilchen in das Lösungsmittel bei erhöhter Temperatur, vorzugsweise bei einer Temperatur im Bereich von 60 °C bis 80 °C und besonders bevorzugt bei 70 °C erfolgt.

Erfindungsgemäß ist vorgesehen, dass das Sprühverfahren bei einer Temperatur durchgeführt wird, die 10°C - 30°C, vorzugsweise 20°C unter der Kristallisationstemperatur des additivierten Polymers liegt.

Nach dem Eintragen des keramischen und/oder metallischen und/oder glasartigen Pulvers bzw. der Substratteilchen in die Lösung wird diese Suspension vorzugsweise direkt in einer bevorzugt Ex-geschützten Sprühanlage verdüst, wobei die Temperatur so gewählt ist, dass das Lösungsmittel vollständig oder teilweise verdampft.

In einer denkbaren Ausführungsform wird das Sprühverfahren so durchgeführt, dass die Suspension in eine Flüssigkeit gesprüht wird, in der der Binder unlöslich ist, wobei es sich bei der Flüssigkeit vorzugsweise um Wasser handelt. Dies bringt den Vorteil mit sich, dass die durch das Sprühverfahren gebildeten Formmassenteilchen und damit auch der Binder gekühlt werden und dadurch eine verbesserte mechanische Stabilität erhalten.

Der im Rahmen der vorliegenden Erfindung eingesetzte Binder weist vorzugsweise eine Schmelzeviskosität von 10° Pa·s bis 10⁶ Pa·s, insbesondere von 10⁰ Pa·s bis 10⁵ Pa·s, und insbesondere von 10° Pa·s bis 10⁴ Pa·s bei einer Temperatur auf, die mindestens 10°C über einer Temperatur Ts liegt, wobei die Temperatur Ts eine Glasübergangstemperatur oder eine Kristallitschmelztemperatur des Binders ist und ein Geschwindigkeitsgefälle insbesondere ausgewählt ist aus der Gruppe 1,00 s⁻¹, 2,50 s⁻¹, 5,00 s⁻¹, 10,0 s⁻¹, 25,0 s⁻¹, 50,0 s⁻¹ und 100 s⁻¹.

Die Bestimmung der Schmelzeviskosität erfolgt vorzugsweise nach DIN EN ISO 3219 (Stand: Oktober 1994). Die angegebenen Werte der Schmelzeviskosität gelten insbesondere für ein Geschwindigkeitsgefälle von 1,00 s⁻¹, Die Temperatur T_{S} ist bei einer amorphen Struktur des Binders die Glasübergangstemperatur und bei einem teilkristallinen Binder die Kristallitschmelztemperatur, insbesondere die maximale Kristallitschmelztemperatur.

Besonders vorteilhaft ist es, wenn die Formmassenteilchen des Formmassenpulvers eine Größe im Bereich von > 0,05 mm, vorzugsweise < 0,2 mm, vorzugsweise 0,05 mm bis 0,15 mm und besonders bevorzugt 0,10 mm aufweisen.

Vorzugsweise ist vorgesehen, dass die Formmassenteilchen jeweils eine maximale Abmessung Aₘₐₓ haben und für mindestens 80 % der Formmassenteilchen gilt: 0,005 mm ≤ Aₘₐₓ ≤ 0,3 mm, insbesondere 0,008 mm ≤ Aₘₐₓ ≤ 0,2 mm, und insbesondere 0,01 mm ≤ Aₘₐₓ ≤ 0,1 mm.

Erfindungsgemäß ist vorgesehen, dass die Formmassenteilchen jeweils eine minimale Abmessung Aₘᵢₙ und eine maximale Abmessung Aₘₐₓ haben und für mindestens 80 % der Formmassenteilchen gilt: 0,6 ≤ Aₘᵢₙ/Aₘₐₓ ≤ 1, insbesondere 0,7 ≤ Aₘᵢₙ/Aₘₐₓ ≤ 1, und insbesondere 0,8 ≤ Aₘᵢₙ/Aₘₐₓ ≤ 1.

Die Verwendung des thermoplastischen Formmassenpulvers als Ausgangsmaterial für ein pulverbasiertes, additives Fertigungsverfahren ist vorgesehen.

Weitere Einzelheiten und Vorteile der Erfindung werden anhand eines in der Zeichnung dargestellten Ausführungsbeispiels näher erläutert.

Es zeigen:
- Figur 1:: eine schematische Darstellung einer Suspension, die zur Zuführung in einen Sprühtrockner bestimmt ist,
- Figur 2:: eine schematische Darstellung der durch Sprühtrocknung der Suspension gemäß Figur 1 gewonnen sphärischen Formmassenteilchen und
- Figur 3:: eine schematische Darstellung eines durch Sprühtrocknung einer wässrigen Suspension erhaltenen Formmassenteilchens.

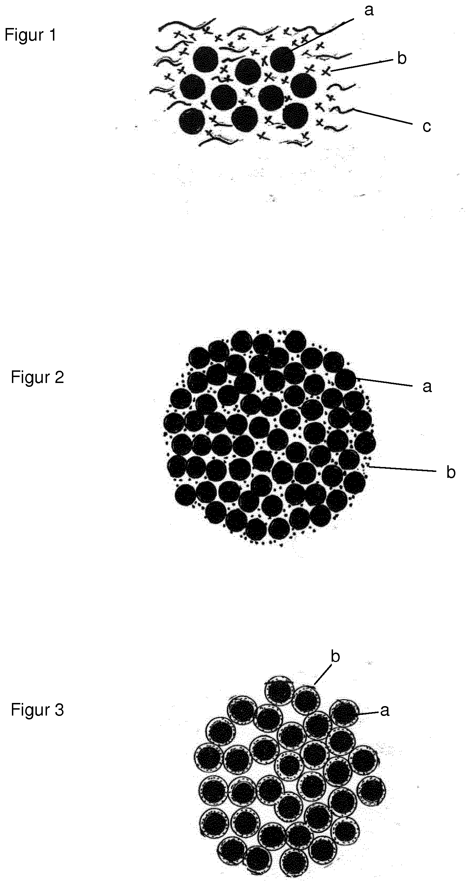

Figur 1 zeigt mit dem Bezugszeichen a metallische Substratteilchen, z.B. aus Edelstahl, Titan etc., die in einer flüssigen alkoholischen Suspension aufgenommen sind. Das alkoholische Medium ist mit dem Bezugszeichen c gekennzeichnet. In diesem Medium ist molekular der Binder bzw. Binderbestandteile b gelöst.

Führt man die in Figur 1 gezeigte Suspension einer Sprühtrocknung zu, indem die Suspension bei erhöhter Temperatur direkt in einen Sprühtrockner eingeführt wird, verdunstet der Alkohol, so dass der Binder umfassend den Weichmacher sowie die metallischen Teilchen zurückbleiben. Der Binder umfassend den Weichmacher wirkt als Haftungsvermittler zwischen den einzelnen metallischen Substratteilchen und hält diese in einem sphärischen Gebilde zusammen, das in Figur 2 dargestellt ist.

Figur 2 zeigt somit ein Formmassenteilchen aus dem die Feedstockmasse, d.h. das thermoplastische Formmassenpulver gemäß der Erfindung besteht. Wie dies aus Figur 2 hervorgeht, ist das Formmassenteilchen kugelförmig bzw. im Wesentlichen kugelförmig.

Es weist einen Durchmesser von < 0,2 mm auf und lässt sich bei einer Temperatur bei bzw. ab 150 °C ohne Druckanwendung in eine Schmelze, vorzugsweise in eine niedrigviskose Schmelze bringen, die dann z.B. in einem 3D-Druckverfahren zu einem Formteil verarbeitet werden kann.

Die Formmassenteilchen gemäß Figur 2 weisen eine gute Fließfähigkeit auf, die insbesondere für das Rakeln im Rahmen eines 3D-Druckverfahrens von Bedeutung ist. Ein weiterer Vorteil der erfindungsgemäßen Formmassenteilchen besteht darin, dass diese aufgrund ihrer Eigenschaft, bei vergleichsweise geringen Temperaturen zu schmelzen, eine entsprechend geringe Betriebstemperatur des 3D-Druckers bedingen.

Besonders vorteilhaft ist die Verwendung der erfindungsgemäßen Formmassenteilchen bei einem pulverbasierten, additiven Fertigungsverfahren, wie beispielsweise bei einem 3D-SLS-Verfahren (SLS = selektives Lasersintern) .

Aus Figur 3 geht ein Formmassenteilchen hervor, das nicht durch das erfindungsgemäße Verfahren erhalten wurde. Dieses Teilchen wurde durch das Sprühtrocknen einer wässrigen Suspension erhalten, die Substratteilchen a aufweist, die mit dem Binder b beschichtet sind, der durch Fällung auf dem Substratteilchen abgeschieden wurde.

Während man beim Sprühtrocknen der wässrigen Suspension Agglomerate gemäß Figur 3 erhält, die eine vergleichsweise offene Porosität zwischen den einzelnen binderbeschichteten Substratteilchen aufweist, ergibt sich beim Sprühtrocknen aus alkoholischer Lösung gemäß der Erfindung ein dichteres Gefüge aus Pulver und Binder, wie dies aus einem Vergleich der Figuren 2 und 3 hervorgeht. Dies bedeutet, dass die Gründichte der erfindungsgemäß erhaltenen Feedstockteilchen höher ist als der aus der wässrigen Suspension gewonnenen Feedstockteilchen.

Höhere Grün- bzw. Schüttdichten sind beim Lasersintern von wesentlicher Bedeutung für die später am gesinterten Formteil vorhandene Sinterdichte.

## Patentansprüche

1. Verfahren zur Herstellung von thermoplastischem Formmassenpulver, welches aus sphärischen Formmassenteilchen besteht oder diese aufweist, aus einer Suspension aus glasartigen und/oder keramischen und/oder metallischen Substratteilchen in einem Lösungsmittel, in dem ein Binder gelöst ist, der ein in dem Lösungsmittel lösliches thermoplastisches Polymer aufweist, wobei der Binder des Weiteren einen in dem Lösungsmittel löslichen Weichmacher aufweist, wobei das Verfahren den Schritt des Sprühtrocknens der Suspension umfasst, wobei das Sprühtrocknen bei einer Temperatur, die 10°C - 30 °C unter der Glasübergangstemperatur oder Kristallisationstemperatur des additivierten thermoplastischen Polymers liegt, derart durchgeführt wird, dass das Lösungsmittel vollständig in die Gasphase übergeht, wobei es sich bei dem Lösungsmittel um einen oder mehrere Alkohole oder um ein oder mehrere alkoholische Medien handelt und es sich bei dem thermoplastischen Polymer um Polyamid handelt, wobei die Formmassenteilchen jeweils eine minimale Abmessung Amin und eine maximale Abmessung Aₘₐₓ haben und für mindestens 80 % der Formmassenteilchen gilt: 0,6 ≤ Aₘᵢₙ/Aₘₐₓ ≤ 1, insbesondere 0,7 ≤ Aₘᵢₙ/Aₘₐₓ ≤ 1, und insbesondere 0,8 ≤ Aₘᵢₙ/Aₘₐₓ ≤ 1.

2. Verfahren nach Anspruch 1, **dadurch gekennzeichnet, dass** es sich bei dem Weichmacher um einen Ester einer Hydroxybenzoesäure und vorzugsweise um einen p-Hydroxybenzoesäure-Fettalkoholester handelt, wobei die Länge der Kohlenstoffkette des Fettalkohols vorzugsweise im Bereich C12 - C26, besonders vorzugsweise im Bereich C18 - C22 liegt.

3. Verfahren nach einem der vorhergehenden Ansprüche, **dadurch gekennzeichnet, dass** die Substratteilchen jeweils eine maximale Abmessung Bₘₐₓ haben und für mindestens 80 % der Substratteilchen gilt: 1 µm ≤ Bₘₐₓ ≤ 50 µm, insbesondere 5 µm ≤ Bₘₐₓ ≤ 40 µm, und insbesondere 10 µm ≤ Bₘₐₓ ≤ 30 µm.

4. Verfahren nach einem der vorhergehenden Ansprüche, **dadurch gekennzeichnet, dass** die Formmassenteilchen jeweils eine maximale Abmessung Aₘₐₓ haben und für mindestens 80 % der Formmassenteilchen gilt: 0,005 mm ≤ Aₘₐₓ ≤ 0,3 mm, insbesondere 0,008 mm ≤ Aₘₐₓ ≤ 0,2 mm, und insbesondere 0,01 mm ≤ Aₘₐₓ ≤ 0,1 mm.

5. Verfahren nach einem der vorhergehenden Ansprüche, **dadurch gekennzeichnet, dass** die Substratteilchen aus einem oder mehreren der Stoffe: Edelmetall, Hartmetall, Glas, Keramik, Buntmetall, Eisen, Titan, deren Legierungen und/oder Verbindungen, Superlegierungen und Stahl bestehen oder eines oder mehrere dieser Stoffe bzw. Metalle, Legierungen oder Verbindungen aufweisen.

6. Verfahren nach einem der vorhergehenden Ansprüche, **dadurch gekennzeichnet, dass** zunächst die keramischen und/oder metallischen und/oder glasartigen Substratteilchen in das Lösungsmittel umfassend den Binder eingebracht werden und sodann das Sprühtrocknen der Suspension durchgeführt wird.

7. Verfahren nach Anspruch 6, **dadurch gekennzeichnet, dass** das Einbringen der keramischen und/oder metallischen und/oder glasartigen Substratteilchen bei erhöhter Temperatur, vorzugsweise bei einer Temperatur im Bereich von 60 °C bis 80 °C und besonders bevorzugt bei 70 °C erfolgt.

8. Verfahren nach einem der vorhergehenden Ansprüche, **dadurch gekennzeichnet, dass** das Verfahren derart durchgeführt wird, dass die Suspension in eine Flüssigkeit gesprüht wird, in der der Binder unlöslich ist, wobei es sich bei der Flüssigkeit vorzugsweise um Wasser handelt.

## Claims

1. Method of manufacturing thermoplastic molding compound powder that consists of or comprises spherical molding compound particles from a suspension of glass-like and/or ceramic and/or metallic substrate particles in a solvent, in which a binder is dissolved that comprises a thermoplastic polymer soluble in the solvent, wherein the binder furthermore comprises a plasticizer soluble in the solvent, wherein the method comprises the step of spray drying the suspension, wherein the spray drying is performed at a temperature that is 10°C - 30°C below the glass transition temperature or crystallization temperature of the additive thermoplastic polymer such that the solvent completely transitions into the gas phase, wherein the solvent is one or more alcohols or one or more alcoholic media, and the thermoplastic polymer is a polyamide, wherein the molding compound particles each have a minimum dimension Amin and a maximum dimension Aₘₐₓ and 0.6 ≤ Aₘᵢₙ/Aₘₐₓ ≤ 1, in particular 0.7 ≤ Aₘᵢₙ/Aₘₐₓ ≤ 1, and in particular 0.8 ≤ Aₘᵢₙ/Aₘₐₓ ≤ 1 applies to at least 80% of the molding compound particles.

2. Method in accordance with claim 1, **characterized in that** the plasticizer is an ester of an aromatic hydroxybenzoic acid and is preferably a p-hydroxybenzoic acid fatty alcohol ester, wherein the length of the carbon chain of the fatty alcohol is preferably in the range C12 - C26, particularly preferably in the range C18 - C22.

3. Method in accordance with one of the preceding claims, **characterized in that** the substrate particles each have a maximum dimension Bₘₐₓ and 1 µm ≤ Bₘₐₓ ≤ 50 µm, in particular 5 µm ≤ Bₘₐₓ ≤ 40 µm, and in particular 10 µm ≤ Bₘₐₓ ≤ 30 µm applies to at least 80% of the substrate particles.

4. Method in accordance with one of the preceding claims, **characterized in that** the molding compound particles each have a maximum dimension Aₘₐₓ and 0.005 mm ≤ Aₘₐₓ ≤ 0.3 mm, in particular 0.008 mm ≤ Aₘₐₓ ≤ 0.2 mm, and in particular 0.01 mm ≤ Aₘₐₓ ≤ 0.1 mm applies to at least 80% of the molding compound particles.

5. Method in accordance with one of the preceding claims, **characterized in that** the substrate particles consist of one or more of the substances: precious metal, hard metal, glass, ceramics, non-ferrous metal, iron, titanium, alloys and/or compounds thereof, superalloys and steel, or comprise one or more of these substances or metals, alloys or compounds.

6. Method in accordance with one of the preceding claims, **characterized in that** the ceramic and/or metallic and/or glass-like substrate particles are first introduced into the solvent comprising the binder, and the spray drying of the suspension then is carried out.

7. Method in accordance with claim 6, **characterized in that** the introduction of the ceramic and/or metallic and/or glass-like substrate particles takes place at elevated temperature, preferably at a temperature in the range from 60°C to 80°C, and particularly preferably at 70°.

8. Method in accordance with one of the preceding claims, **characterized in that** the method is carried out such that the suspension is sprayed into a liquid in which the binder is insoluble, wherein the liquid preferably is water.

## Revendications

1. Procédé de fabrication d'une poudre de matière à mouler thermoplastique, laquelle consiste en de particules sphériques de matière à mouler ou présente celles-ci, à partir d'une suspension composée de particules de substrat vitreuses et/ou céramiques et/ou métalliques dans un solvant, dans lequel est dissous un liant, qui présente un polymère thermoplastique soluble dans le solvant, dans lequel le lien présente par ailleurs un plastifiant soluble dans le solvant, dans lequel le procédé comprend l'étape du séchage par pulvérisation de la suspension, dans lequel le séchage par pulvérisation est réalisé à une température qui est inférieure de 10 °C - 30 °C à la température de transition vitreuse ou à la température de cristallisation du polymère thermoplastique ajouté de telle manière que le solvant passe totalement dans la phase gazeuse, dans lequel le solvant est un ou plusieurs alcools ou un ou plusieurs milieux à base d'alcool et le polymère thermoplastique est du polyamide, dans lequel les particules de matière à mouler ont respectivement une taille minimale Amin et une taille maximale Aₘₐₓ et s'applique pour au moins 80 % des particules de matière à mouler : 0,6 ≤ Aₘᵢₙ/Aₘₐₓ ≤ 1, en particulier 0,7 ≤ Aₘᵢₙ/Aₘₐₓ ≤ 1, et en particulier 0,8 ≤ Aₘᵢₙ/Aₘₐₓ ≤ 1.

2. Procédé selon la revendication 1, **caractérisé en ce que** le plastifiant est un ester d'un acide hydroxybenzoïque et de préférence est un ester d'alcool gras d'acide p- hydroxybenzoïque, dans lequel la longueur de la chaîne de carbone de l'alcool gras se situe de préférence dans la plage C12 - C26, en particulier de préférence dans la plage C18 - C22.

3. Procédé selon l'une quelconque des revendications précédentes, **caractérisé en ce que** les particules de substrat ont respectivement une taille maximale Bₘₐₓ et s'applique pour au moins 80 % des particules de substrat : 1 µm ≤ Bₘₐₓ ≤ 50 µm, en particulier 5 µm ≤ Bₘₐₓ ≤ 40 µm, et en particulier 10 µm ≤ Bₘₐₓ ≤ 30 µm.

4. Procédé selon l'une quelconque des revendications précédentes, **caractérisé en ce que** les particules de matière à mouler ont respectivement une taille maximale Aₘₐₓ et s'applique pour au moins 80 % des particules de matière à mouler : 0,005 mm ≤ Aₘₐₓ ≤ 0,3 mm, en particulier 0,008 mm ≤ Aₘₐₓ ≤ 0,2 mm, et en particulier 0,01 mm ≤ Aₘₐₓ ≤ 0,1 mm.

5. Procédé selon l'une quelconque des revendications précédentes, **caractérisé en ce que** les particules de substrat consistent en une ou plusieurs des substances : métal précieux, métal dur, verre, céramique, métal lourd non ferreux, fer, titane, leurs alliages et/ou composés, superalliages et acier ou présentent une ou plusieurs desdites substances ou un ou plusieurs desdits métaux, alliages ou composés.

6. Procédé selon l'une quelconque des revendications précédentes, **caractérisé en ce qu'**en premier lieu les particules de substrat céramiques et/ou métalliques et/ou vitreuses sont introduites dans le solvant comprenant le lien puis le séchage par pulvérisation de la suspension est réalisé.

7. Procédé selon la revendication 6, **caractérisé en ce que** l'introduction des particules de substrat céramiques et/ou métalliques et/ou vitreuses est effectuée à une température plus élevée, de préférence à une température dans la plage de 60 °C à 80 °C et de manière particulièrement préférée de l'ordre de 70 °C.

8. Procédé selon l'une quelconque des revendications précédentes, **caractérisé en ce que** le procédé est réalisé de telle manière que la suspension est pulvérisée dans un liquide, dans lequel le liant n'est pas soluble, dans lequel le liquide est de préférence de l'eau.
